# EUROPEAN PATENT APPLICATION

(11) **EP 1 837 815 A1**
(43) Date of publication of application: **26.09.2007**
(21) Application number: 06076638.3
(22) Date of filing: 29.08.2006
(51) Int. Cl.: G06Q 10/00, H04L 12/58, H04L 29/08

(54) **Method for acquiring information and hand-held mobile communications device for implementing the method**

(30) Priority: 21.03.2006 CN 200610065152
(71) Applicant: ACER INCORPORATED, Taipei Hsien (TW)
(72) Inventor: Chen, Tse-Min., c/o Acer Incorporated, Taipei Hsien 221 (TW); Yin-Hsong, Hsu., c/o Acer Incorporated, Taipei Hsien 221 (TW); Maskata, Arif., c/o Acer Incorporated, Taipei Hsien 221 (TW)
(74) Representative: Seitz, Holger Fritz Karl

(57) **Abstract**

A method for acquiring information is implemented in a hand-held mobile communications device to access information in a remote information server through the Internet. The method includes enabling the communications device to acquire information from the information server at predetermined times, to filter the acquired information according to a filtering rule, and to display information complying with the filtering rule or a notification message relating to the information complying with the filtering rule according to a user setting. The method and device permits user convenience and ensures information confidentiality, without incurring extra fees. The information may be electronic mail or web page information. The filtering may be on a keyword containing in items such as sender, source, author, subject or text.

## Description

### BACKGROUND OF THE INVENTION

### 1. Field of the Invention

The invention relates to a mobile information providing method, more particularly to a method for acquiring information, which is implemented in a hand-held mobile communications device.

### 2. Description of the Related Art

In this era when developments of Internet and wireless communications technologies flourish, use of a handset to send and receive e-mail has become one of the channels to obtain latest information. In order to facilitate reception of e-mail and to block spam mail, more and more telecommunications service providers provide push mail services, and push mail has recently become a popular subject for discussion.

With the so-called push mail, after the user has set relevant rules or conditions, such as subjects of the mail to be received, or senders of the mail to be received, in a mail server, when contents of an e-mail message received by the mail server comply with the preset rules, the mail server will automatically send a backup copy of the mail to a device of the user, such as a handset or a personal computer. Therefore, the user can have the latest e-mail without having to go through such troublesome procedures as accessing the Internet, inputting his/her account number and user password, etc.

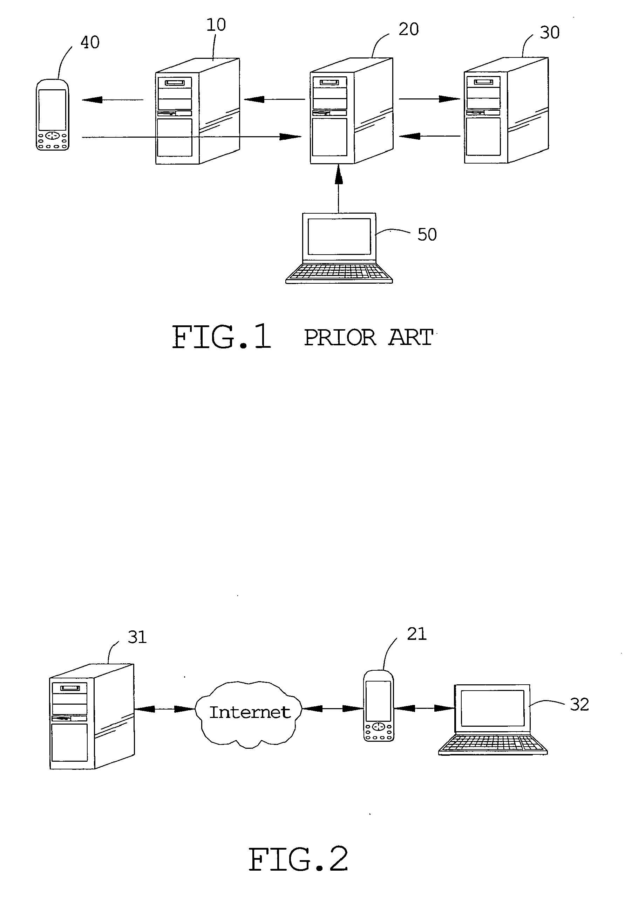

Figure 1 depicts a push mail service system developed by a company named Research In Motion (RIM) in Canada using the push mail technology. The system provides a push mail server 20 connected to a telecommunications service provider 10 having a cooperative relation with said company, and various mail servers 30 (only one is exemplified). When a user subscribes to a push mail service from the telecommunications service provider 10, and the user has his/her handset 40 loaded with relevant software for the push mail server 20 or the user uses an electronic device supplied by RIM, the user can link up with the push mail server 20 through a personal computer 50 to set parameters of the mail to be received by the handset 40thereby, such as subjects of the mail, senders of the mail, etc. Thereafter, the push mail server 20 will check and screen the e-mail on the push mail server 20 according to the rules preset by the user regularly, convert those e-mail messages that comply with the user's preset rules to a specific format suitable for reception by the user's handset 40, and transmit the same to the user's handset 40 through the telecommunications service provider 10.

However, there exist the following problems with the aforesaid push mail service system:
1. The push mail service provider has to invest manpower and time resources to maintain the push mail server 20;
2. Subscribing to the push mail service involves payment of an extra fee to the provider of the push mail server 20; and
3. Since the e-mail for the user is received and screened by the push mail server 20, and is converted to a suitable format by the push mail server 20 before being sent to the user's handset 40, security issues may arise.

Therefore, how to provide push mail functionality while avoiding the aforesaid problems is a subject to be investigated in the present invention.

### SUMMARY OF THE INVENTION

Therefore, the object of the present invention is to provide a method for acquiring information, and a hand-held mobile communications device implementing the method which can overcome the above drawbacks of the prior art.

According to one aspect of the present invention, the method for acquiring information is adapted to be implemented in a hand-held mobile communications device so as to access information in a remote information server through the Internet. The method comprises: (A) acquiring information from the information server at predetermined times; (B) filtering the acquired information according to a filtering rule; and (C) according to a user setting, displaying one of the information that complies with the filtering rule and a notification message relating to the information that complies with the filtering rule.

According to another aspect of the present invention, the hand-held mobile communications device is adapted to access information in a remote information server through the Internet. The hand-held mobile communications device includes: a communications unit for communicating with the information server; and a processing unit for acquiring information from the information server at predetermined times through the communications unit, for filtering the acquired information according to a filtering rule, and for displaying one of information that complies with the filtering rule and a notification message relating to the information that complies with the filtering rule according to a user setting.

### BRIEF DESCRIPTION OF THE DRAWINGS

Other features and advantages of the present invention will become apparent in the following detailed description of the preferred embodiment with reference to the accompanying drawings, of which:
Figure 1 is a schematic diagram of the system architecture of a conventional push mail service system;
Figure 2 is a schematic diagram of a system for the preferred embodiment of a method for acquiring information according to the present invention;
Figure 3 is a block diagram of the internal hardware architecture of the preferred embodiment of a hand-held mobile communications device according to the present invention;
Figure 4 is a flowchart of a mail information search using the preferred embodiment of the hand-held mobile communications device;
Figure 5 is a flowchart of an initialization procedure conducted for the preferred embodiment of the hand-held mobile communications device through a personal computer;
Figure 6 is a schematic diagram showing a "Set Up an E-mail Account" screen in the preferred embodiment;
Figure 7 is a schematic diagram showing an "Add a New Account" screen in the preferred embodiment;
Figure 8 is a schematic diagram showing an "Add a POP3 Account" screen in the preferred embodiment;
Figure 9 is a schematic diagram showing an "Add an iNotes Account" screen in the preferred embodiment;
Figure 10 is a schematic diagram showing an "Add a Google Mail Account" screen in the preferred embodiment;
Figure 11 is a schematic diagram showing a "Set Up Mail Filter" screen in the preferred embodiment;
Figure 12 is a schematic diagram of a home page screen on the hand-held mobile communications device in the preferred embodiment;
Figure 13 is a schematic diagram showing contents of an e-mail displayed on a display screen of the hand-held mobile communications device in the preferred embodiment;
Figure 14 is a schematic diagram of another home page screen on the hand-held mobile communications device in the preferred embodiment;
Figure 15 is a schematic diagram of a "Check Mail Schedule" screen in the preferred embodiment;
Figure 16 is a schematic diagram of a "Mobile Mail Filter" screen in the preferred embodiment;
Figure 17 is a schematic diagram of another "Mobile Mail Filter" screen in the preferred embodiment;
Figure 18 is a schematic diagram of a "Search Mail" screen in the preferred embodiment;
Figure 19 is a schematic diagram of a "Mail Account" screen in the preferred embodiment;
Figure 20 is a schematic diagram of a "Mail Account Settings" screen in the preferred embodiment;
Figures 21-23 are schematic diagrams of "POP3 Account Settings" screens in the preferred embodiment;
Figure 24 is a schematic diagram of an "iNotes Account Settings" screen in the preferred embodiment; and

Figure 25 is a schematic diagram of a menu screen including options of "Filter," "Mail Account," "Check Mail Schedule," and "Backup/Save" in the preferred embodiment.

### DETAILED DESCRIPTION OF THE PREFERRED EMBODIMENT

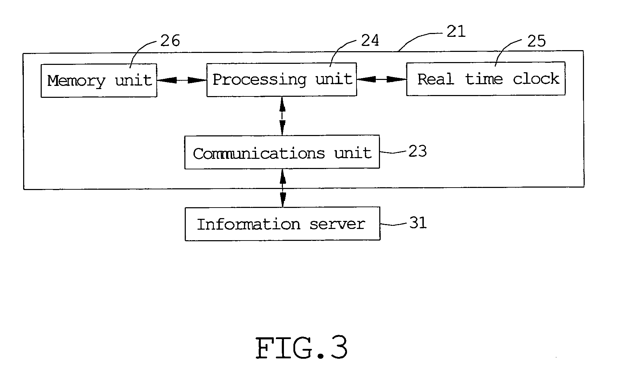

Referring to Figures 2 and 3, the preferred embodiment of a hand-held mobile communications device 21 according to the present invention is shown to be able to connect with various remote information servers 31 (only one is exemplified) through the Internet so as to access information in the information servers 31.

In this embodiment, the information server 31 is a mail server, such as the existing Exchange Mail Server, POP3/SMTP Mail Server, Gmail (Google mail) Server, and iNotes Server developed by IBM. In addition, the hand-held mobile communications device 21 of this embodiment is a smart phone having a network accessing function, such as a mobile phone or a PDA phone supporting a wireless communications protocol, e.g., the GPRS (General Packet Radio Service), the WCDMA (Wideband Code Division Multiple Access), the CDMA2000 or the Wi-Fi, and an operating system capable of executing information downloading and reading functions, such as Win CE5.0.

As shown in Figure 3, the hand-held mobile communications device 21 has a conventional hardware architecture which includes a communications unit 23, a processing unit 24, a real time clock 25, and a memory unit 26. The invention can be implemented with conventional hand-held mobile communication device 21, avoiding altering the hardware thereof.

The communications unit 23 can be connected to the Internetbased on, for example, GPRS, WCDMA, CDMA 2000, or Wi-Fi protocols to permit wireless transmission with the information server 31. The real time clock 25 provides time information. An independent power source (not shown) of the hand-held mobile communications device 21 supplies power to the real time clock 25 so as to ensure that the real time clock 25 can still operate even when the hand-held mobile communications device 21 is turned off.

The processing unit 24 not only can execute voice communication, butcan also receive filtering rules input from users. The processing unit 24 filters the mails received from the information server 31 according to the predetermined filtering rules. When there are new mails that pass through the filtering rules, the processing unit notifies the user. In addition, the hand-held mobile communications device 21 is loaded with a proprietary mobile mail application program which can control the aforementioned components, and execute the following steps.

The proprietary application program allows the user to set the interval for checking e-mail. Therefore, the application program triggers the processing unit 24 to access the e-mail in the information server 31 at preset intervals according to the timing of the real time clock 25.

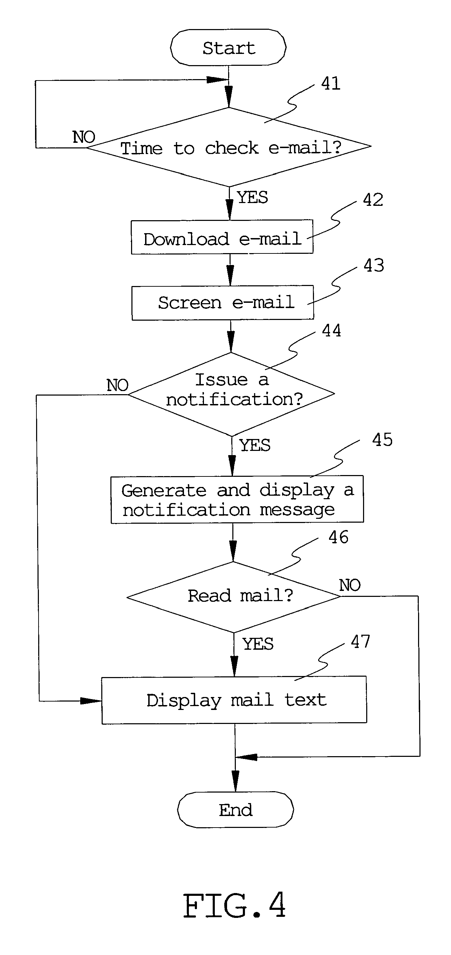

Therefore, in step 41 of Figure 4, when the mobile communications device 21 is in a standby mode, the application program will not triggerthe processing unit 24 to access the e-mail in the information server 31 until the checking e-mail interval has come. At this time, in step 42, the processing unit 24 will download the e-mail from the information server 31 through the communications unit 23 and store the same in the memory unit 26. Then, in step 43, according to the filtering rules preset by the user, some of the data of the received e-mail are screened, e.g., the senders, the subjects, or some of the contents of the e-mail are screened, to rule out unwanted e-mail, and the e-mail that complies with the preset filtering rules is retained in the memory unit 26.

Then, step 44 is carried out to determine whether or not to send a notification to alert the user based on a previous setting by the user. For instance, if the setting of the user is to issue a notification before the user decides whether or not to read the mail, step 45 is performed to generate and display a notification on a screen of the hand-held mobile communications device 21 to notify the user of receipt of new e-mail. Then, in step 46, the processing unit 24 waits for the user to issue a read-mail command and, whereupon, carries out step 47 to read the mail from the memory unit 26 and display the mail on the display screen of the hand-held mobile communications unit 21. On the contrary, if the user's previous setting in step 44 is to read the mail directly, a notification will not be issued, and the flow skips to step 47 to enable the processing unit 24 to read the mail from the memory unit 26 directly and to display the mail on the screen.

The above is a brief description of the flow of the application program in this embodiment. The method of use and the flow of operation of the hand-held mobile communications device 21 will now be described in detail in the succeeding paragraphs.

Referring to Figure 2, before the mobile mail function of the hand-held mobile communications device 21 can be used, an initialization procedure with respect to the hand-held mobile communications device 21 has to be conducted through a personal computer 32.

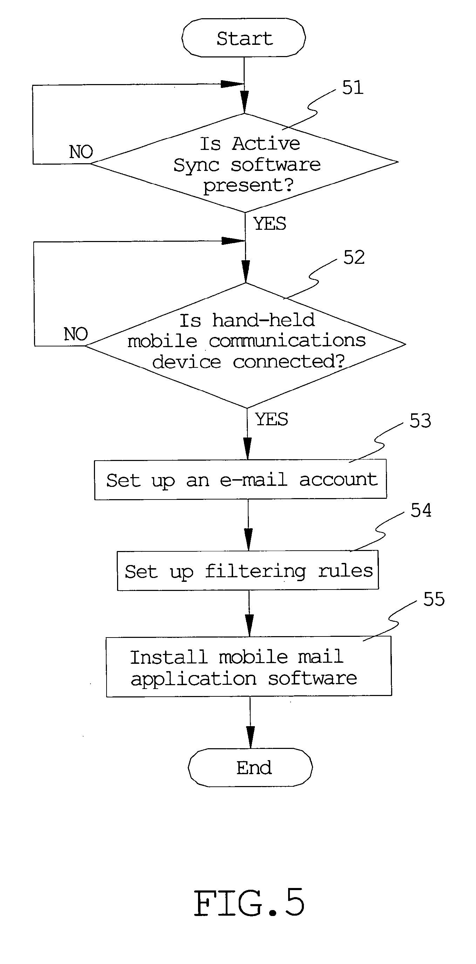

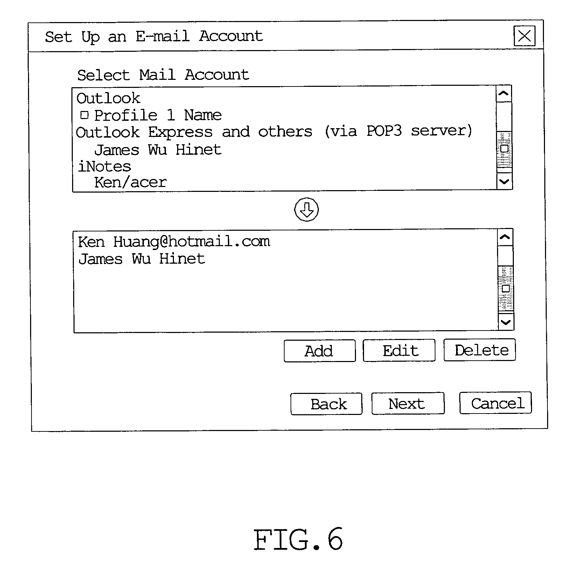

Referring to Figure 5, in step 51, before commencement of the initialization procedure, the personal computer 32 is enabled to inspect whether the hand-held mobile communications device 21 has installed therein software (e.g., the conventional Active sync software) that allows access to the hand-held mobile communications device 21 by the personal computer 32. After confirming the presence of such software, in step 52, the personal computer 32 inspects whether the hand-held mobile communications device 21 is connected to the personal computer 32. If yes, the flow goes to step 53, in which a "Set Up an E-mail Account" screen as shown in Figure 6 is displayed on the personal computer 32. In the upper text box of the screen, there is shown mail server account information (Profile 1 Name, Profile 2 Name, James Wu Hinet,... etc.) of a mail handler (e.g., outlook or outlook express) in the personal computer 32 available for the user's selection and addition to the lower text box of the screen so as to set the mail server to be searched.

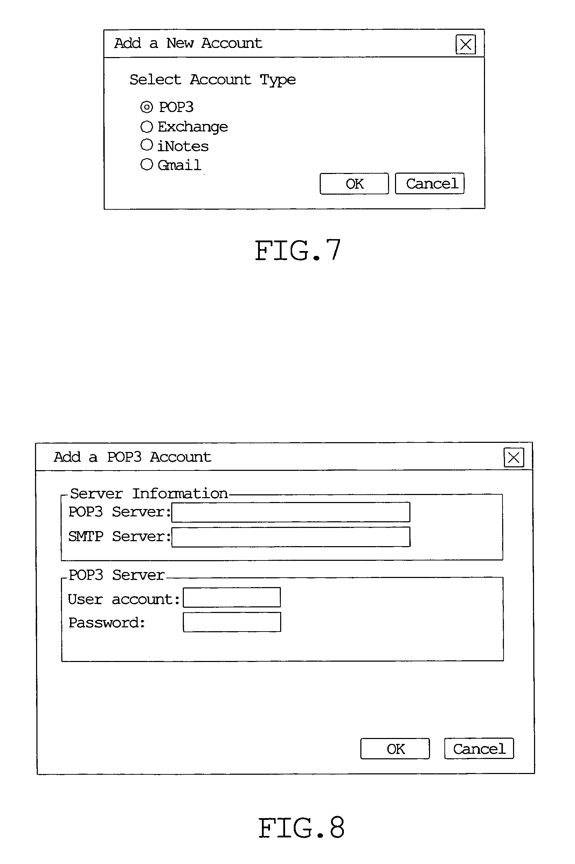

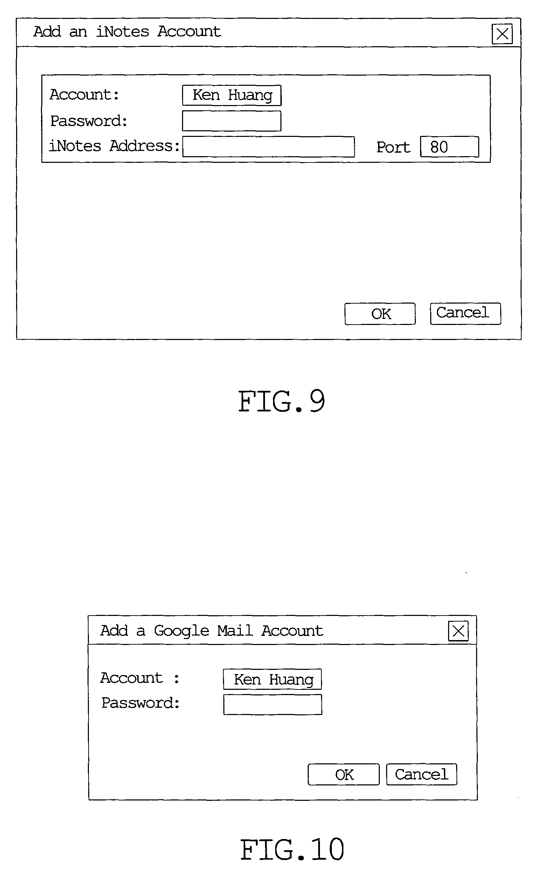

At the same time, command buttons of "Add," "Edit," "Delete," etc., are displayed at a lower portion of the screen. When the user selects the "Add" command button, a screen entitled "Add a New Account" such as that shown in Figure 7 will appear, listing a number of mail server accounts, e.g., POP3, Exchange, iNotes, and Gmail, for the user's selection. When the user selects "POP3," a screen entitled "Add a POP3 Account" as shown in Figure 8 will appear to allow the user to set relevant information of the mail server (incoming mail server POP3 and outgoing mail server SMTP), such as server address, user account and password. When the user chooses "iNotes" or "Gmail," on the screen of Figure 7, an "Add an iNotes Account" screen as shown in Figure 9, or an "Add a Google Mail Account" screen as shown in Figure 10, will appear to allow the user to input information such as mail account and password or mail address (for iNotes). After the user has finished inputting such information and has clicked on the "OK" button, the personal computer 32 will inspect the accuracy of the data inputted by the user before proceeding with the search for the newly added mail account. After locating the mail account, the mail account will be added to the lower text box of the screen of Figure 6. In addition, the user can also choose "Edit" or "Delete" on the screen of Figure 6 to edit the mail account data or delete the mail account.

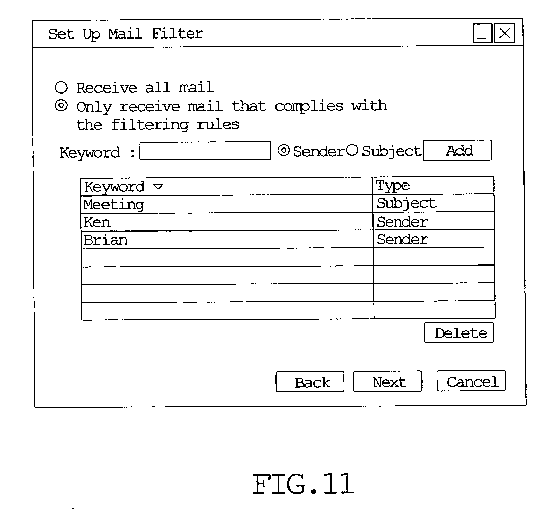

After the user has set the mail account in the "Set Up an E-Mail Account" screen and selected the "Next" command button thereon, in step 54, a screen entitled "Set Up Mail Filter" as shown in Figure 11 will appear to allow the user to set filtering rules. The user can enter one or more keywords in the "keyword" box on the screen, and choose the "sender" or "subject" option button to relate the entered keyword/keywords to the sender or the subject of an e-mail message. By clicking the "Add" button, the keyword/keywords can be added to the filtering rule box at the lower part of the screen. The setup data will be recorded in the processing unit 24. After the settings are completed, in step 55, the personal computer 32 executes a software install procedure with respect to the hand-held mobile communications device 21 to install another application program for executing a mobile mail service into the hand-held mobile communications device 21. After installation, the hand-held mobile communications device 21 will have a mobile mail function.

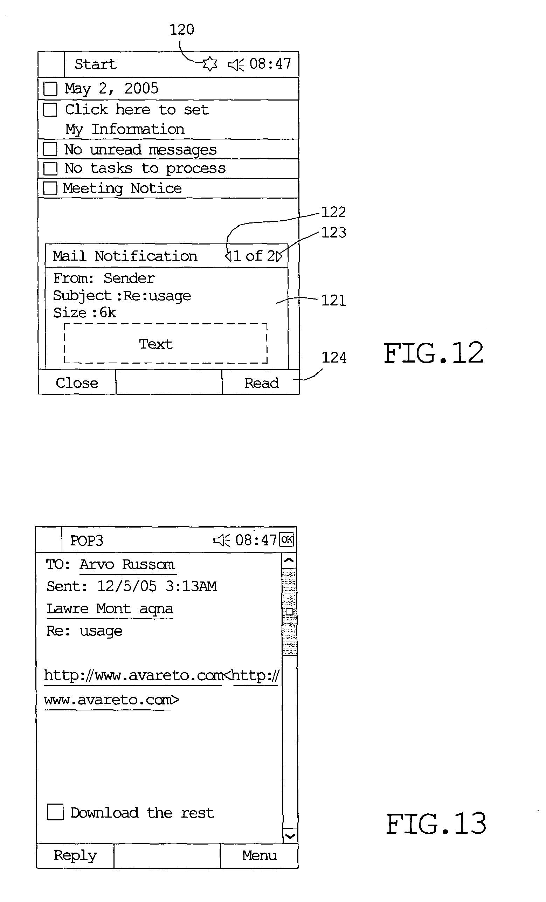

Therefore, referring to Figure 12, when the processing unit 24 of the hand-held mobile communications device 21 checks the mail in the information server 31, and locates mail that has complied with the filtering rules, an incoming notification will be generated to notify the user to check the hand-held mobile communications device 21. The incoming notification may be a ringing tone or vibration. Moreover, a visible incoming notification icon, such as a star-shaped icon 120, will be displayed on a home page screen of the hand-held mobile communications device 21 as shown in Figure 12. The user can customize or edit the form of the incoming notification as well as edit the icon 120. Therefore, when the user clicks on the star-shaped icon 120, a message window 121 will open at the lower part of the home page screen to display a mail notification message, which includes the sender of the mail, the subject of the mail, and the size of the mail. At the same time, a "Read" button 124 is shown at the bottom of the home page screen to allow the user to read the text of the mail upon clicking the "Read" button 124. Furthermore, when there are several notification messages from the hand-held mobile communications device 21, the number of the notification messages will be shown at the right upper corner of the message window 121, and left and right arrows 122, 123 are provided to allow the user to choose to read the notification messages of interest.

In addition, the message window 121 may be a customized message window that allows the user to edit settings of the message window.

Furthermore, aside from being configured to send a notification in advance, the processing unit 24 of the hand-held mobile communications device 21 may also be set to automatically display the text (content) of the mail, including the sender, the subject, and the size of the mail, upon obtaining mail that complies with the filtering rules.

In addition, since the processing unit 24 downloads the text of the mail in whole or in part (depending on the size of the mail), in case the mail is not downloaded in its entirety or there is an attachment to the mail, referring to Figure 13, when the content of the mail is being displayed on the display screen of the hand-held mobile communications device 21, a "Download the Rest" option button will appear at the bottom of the screen to allow the user to choose to download the rest of the content of the mail.

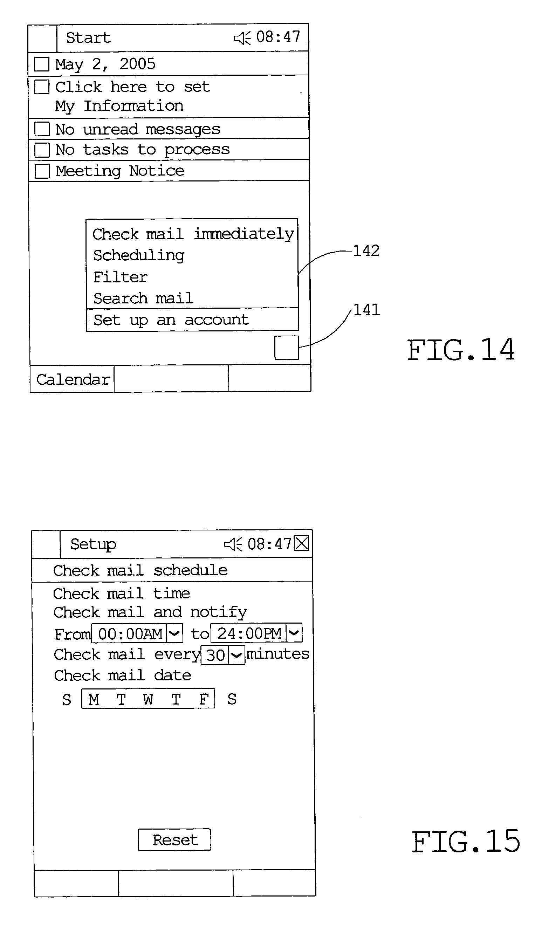

Referring to Figure 14, a virtual button 141 is further provided at a lower right corner of the home page screen of the hand-held mobile communications device 21. Upon clicking the virtual button 141, a menu 142 displaying several choices including "Check Mail Immediately," "Scheduling," "Filter," "Search Mail," and "Set Up Account" is shown. When the user clicks "Check Mail Immediately," the processing unit 24 will be activated to search the information server 31 for any mail that complies with the filtering rule, and to display the search results, as shown in Figure 12. When the "Scheduling" option is clicked, the display screen of the hand-held mobile communications device 21 will display a "Set Up" page, as shown in Figure 15, and the user can set the mail checking time of the processing unit 24 on the "Set Up" page to enable the application program to activate the processing unit 24 to search for mail data in the information server 31 at preset times according to the time setting.

Furthermore, to ensure the accuracy of the date and time for the processing unit 24 to perform data searches, the hand-held mobile communications device 21 can also be automatically connected to a clock server on the Internet at predetermined times so as to permit automatic calibration of the time of the real time clock 25.

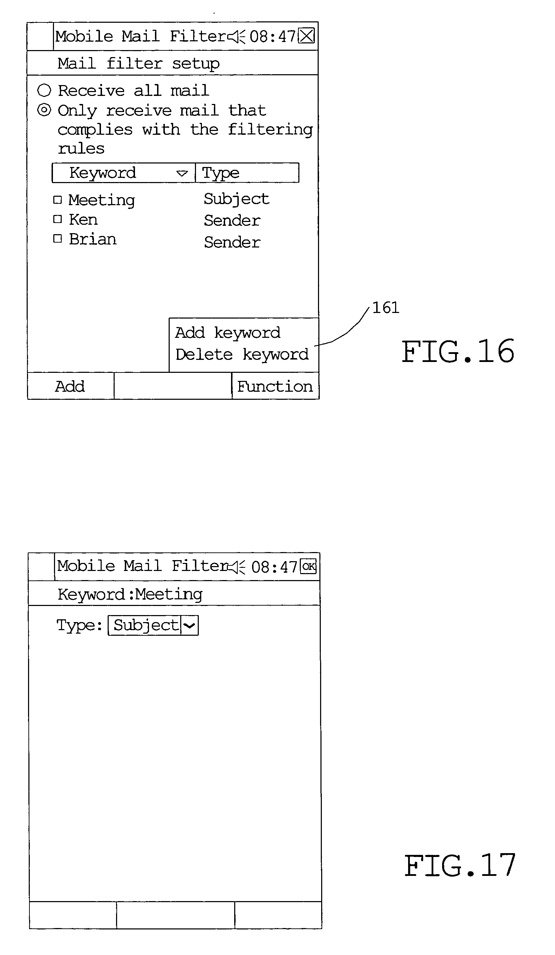

When the user chooses the "Filter" option of the menu 142 in the screen of Figure 14, a screen entitled "Mobile Mail Filter" as shown in Figure 16 will appear, showing the original filtering rule settings, with a menu 161 containing options of "Add Keywords" and "Delete Keywords" to allow the user to choose to add or delete a keyword to be searched, as shown in Figure 17.

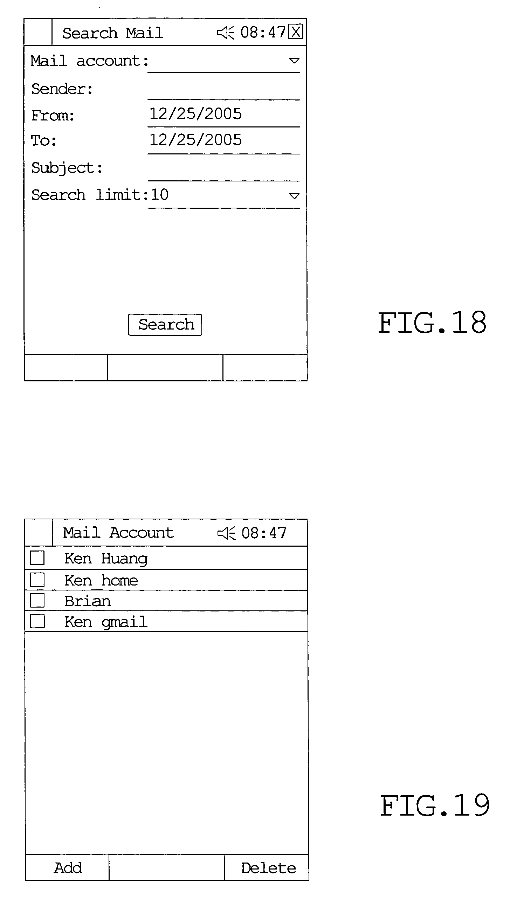

When the user chooses the "Search Mail" option of the menu 142 in the screen of Figure 14, a "Search Mail" screen as shown in Figure 18 will pop up to allow the user to enter search parameters, e.g., mail account, sender, time period, subject, etc. The processing unit 24 of the hand-held mobile communications device 21 will immediately access the information server 31 to search for e-mail based on the search parameters, and display the search results, as shown in Figure 12.

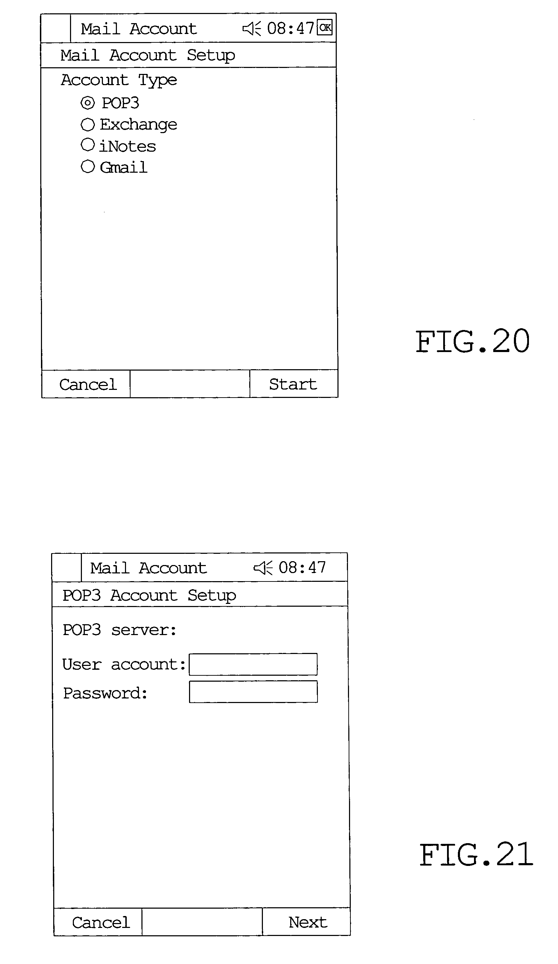

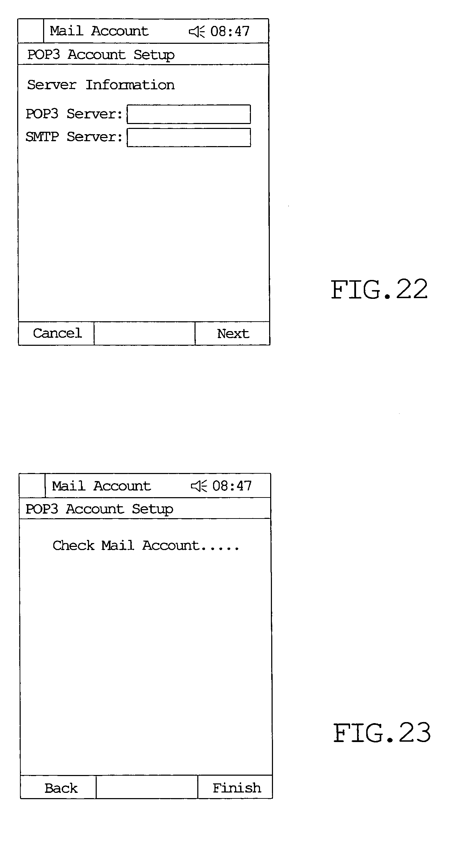

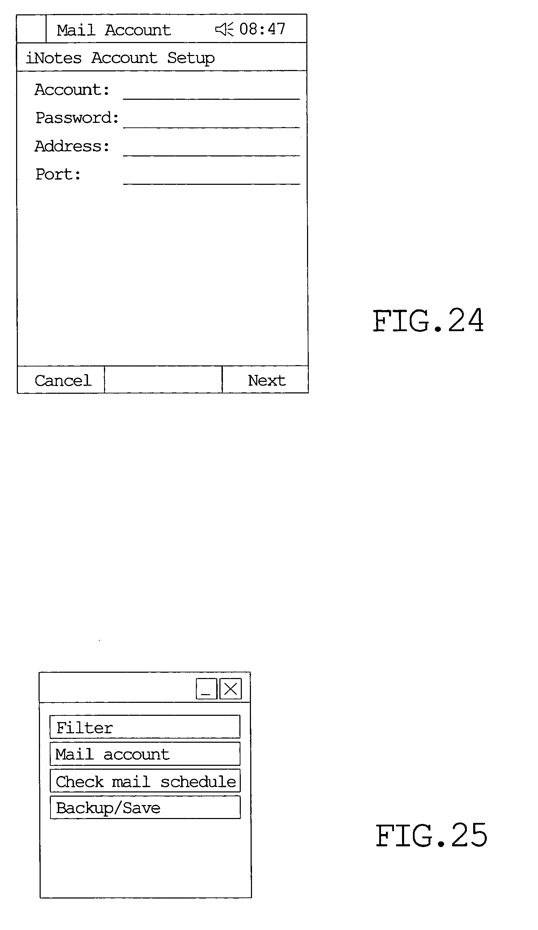

When the "Set up an account" option of the menu 142 in the screen of Figure 14 is chosen, a screen entitled "Mail Account" as shown in Figure 19 will appear, showing the currently set mail accounts. At the same time, option buttons of "Add" and "Delete" are provided at the bottom of the screen to allow the user to choose to add or delete a mail account. When the user chooses "Add" option, a screen entitled "Mail Account Settings" as shown in Figure 20 will appear to allow the user to select the type of account, e.g., POP3, Exchange, iNotes, or Gmail. If the type of account selected by the user is POP3 or Gmail, windows such as those respectively shown in Figures 21 and 22 will appear in sequence to allow the user to set relevant information, e.g., to enter the user account number, password, server address, etc. Then, a screen as shown in Figure 23 will appear to confirm the data inputted by the user so as to add a new account. On the other hand, if the type of account selected by the user is Exchange or iNotes, a window as shown in Figure 24 will appear to allow the user to enter relevant information, and a checking procedure as illustrated in Figure 23 is performed to add a new mail account.

After the hand-held mobile communications device 21 has undergone the initialization procedure on first use, if the user wants to change the settings of the hand-held mobile communications device 21 through the personal computer 32, the hand-held mobile communications device 21 is connected to the personal computer 32, and the personal computer 32 will display a menu including the options "Filter," "Mail Account," "Check Mail Schedule," and "Backup/Save" for the user to choose. The process for setting the "Filter," the "Mail Account," and the "Check Mail Schedule" is the same as that described heretofore (see Figures 16-17, Figures 19-24, and Figure 15), and will not be discussed further herein.

The "Backup/Save" option allows the user to store the setup data in the personal computer 32, or, in case of damage to the original setup data in the hand-held mobile communications device 21, to use the backup copy of the setup data stored in the personal computer 32 to replace the damaged setup data in the hand-held mobile communications device 21.

In addition, the hand-held mobile communications device 21 of this embodiment not only can screen e-mail, it can also screen web page information provided by the information server 31. The information server 31 referred to in this case is a web server which can supply articles published in different blogs, or news information provided by different websites (e.g., Yahoo news).

In the same manner as that described hereinabove, the processing unit 24 of the hand-held mobile communications device 21 can go to the information server 31 at predetermined times to retrieve web information, and can filter the web information of interest to the user according to the filtering rule (keywords relating to web page source, subject, text, etc.) set in the filter of the processing unit 24, and issue notifications to alert the user to read the filtered web page information or directly display the web page information of interest to the user for the user to browse the information provided on the web page through a hyperlink.

By means of setting a filtering rule in the hand-held mobile communications device 21 of this embodiment, the hand-held mobile communications device 21 can search information in the information server 31 which complies with the filtering rule set by the user, and then issue a notification to advise the user to read the filtered information. Thus, the user will not receive unwanted information through the hand-held mobile communications device 21, and, as the retrieval of information does not need to go through a third party, no additional telecommunications service fees are required. Besides, the integrity and confidentiality of the information can be ensured. Thus, the intended effect and object of this invention can be achieved.

While the present invention has been described in connection with what is considered the most practical and preferred embodiment, it is understood that this invention is not limited to the disclosed embodiment but is intended to cover various arrangements included within the spirit and scope of the broadest interpretation so as to encompass all such modifications and equivalent arrangements.

## Claims

1. A method for acquiring information adapted to be implemented in a hand-held mobile communications device so as to access information in a remote information server through the Internet, said method comprising:
(A) acquiring information from the information server at predetermined times;
(B) filtering the acquired information according to a filtering rule; and
(C) according to a user setting, displaying one of the information that complies with the filtering rule and a notification message relating to the information that complies with the filtering rule.

2. The method of Claim 1, wherein the information server is a mail server, and the information is electronic mail stored temporarily in the mail server.

3. The method of Claim 2, wherein the filtering rule defines search and filtering parameters of at least one keyword in at least one of a sender, subject and text of an electronic mail.

4. The method of Claim 1, wherein the information server is a web server, and the information is web page information stored temporarily in the web server, the web page information being filtered according to the filtering rule in step (B).

5. The method of Claim 4, wherein the filtering rule defines search parameters of at least one keyword in at least one of a source, an author, a subject, and text of the web page information.

6. The method of any of the preceding Claims, wherein, in step (C), when the notification message is displayed according to the user setting, the notification message is accompanied by an incoming notification to alert the user to check the notification message.

7. The method of Claim 6, wherein the incoming notification is in the form of one of a ringing tone, vibrations, and a visible signal, and the form of the incoming notification is a customized form set by the user.

8. The method of Claim 6 or 7, wherein, in step (C), the notification message is a message window shown on a home page screen of the hand-held mobile communications device, the message window displaying a source, subject and size of the information complying with the filtering rule, the home page screen further providing a "Read" option to allow the user to choose to display contents of the information related to the notification message.

9. The method of Claim 8, wherein the message window is a customized window set by the user.

10. The method of any of the preceding Claims, wherein, in step (C), when the information that complies with the filtering rule is displayed according to the user setting, source, subject, and size of the information are concurrently displayed.

11. A hand-held mobile communications device adapted to access information in a remote information server through the Internet, said hand-held mobile communications device comprising:
a communications unit for communicating with the information server; and
a processing unit for acquiring information from the information server at predetermined times through said communications unit, for filtering the acquired information according to a filtering rule, and for displaying one of information that complies with the filtering rule and a notification message relating to the information that complies with the filtering rule according to a user setting.

12. The hand-held mobile communications device of Claim 11, wherein said communications unit supports at least one wireless communications protocol selected from the group comprising GPRS, the WCDMA, the CDMA2000 orthe WI-FI.

13. The hand-held mobile communications device of Claim 12, wherein said processing unit is loaded with an operating system capable of accessing the information in the information server through said communications unit.

14. The hand-held mobile communications device of any of Claims 11-13, further comprising a memory unit for storing temporarily the information acquired by said processing unit and the information that complies with the filtering rule.

15. The hand-held mobile communications device of any of Claims 11-14, further comprising a real time clock to allow for setting of times for said processing unit to search the information in the information server such that said processing unit can be activated at the predetermined times to search the information in the information server.

16. The hand-held mobile communications device of Claim 15, further comprising means for calibrating automatically the time of said real time clock through the Internet so as to ensure accuracy of the times for said processing unit to search the information in the information server.

17. The hand-held mobile communications device of any of Claims 11-16, further comprising a display screen, said processing unit displaying one of the information complying with the filtering rule and the notification message relating to the information complying with the filtering rule on said display screen according to the user setting.

18. The hand-held mobile communications device of Claim 17, wherein said processing unit generates an incoming notification concurrently with the displaying of the notification message on said display screen so as to alert the user to check the notification message.

19. The hand-held mobile communications device of Claim 18, wherein said processing unit displays the notification message on a home page screen of said display screen in the form of a message window, the message window displaying source, subject and size of the information complying with the filtering rule, the home page screen further providing a "Read" option to allow the user to choose to display contents of the information related to the notification message.

20. The hand-held mobile communications device of any of Claim 13-19, wherein said processing unit shows the source, subject and size of the information concurrent with display of the information complying with the filtering rule according to the user setting.
